(19) Europäisches Patentamt
European Patent Office
Office européen des brevets

(11) EP 2 640 793 B1

(12) EUROPEAN PATENT SPECIFICATION

(45) Date of publication and mention of the grant of the patent:
**25.02.2015 Bulletin 2015/09**

(21) Application number: **11785254.1**

(22) Date of filing: **09.11.2011**

(51) Int Cl.:
***C09J 123/22*** *(2006.01)* ***C09J 7/02*** *(2006.01)*

(86) International application number:
**PCT/US2011/059862**

(87) International publication number:
**WO 2012/067902 (24.05.2012 Gazette 2012/21)**

# (54) IONICALLY CROSSLINKABLE POLY(ISOBUTYLENE) ADHESIVE POLYMERS

IONISCH VERNETZBARE POLY(ISOBUTYLEN)-HAFTPOLYMERE

POLYMÈRES ADHÉSIFS DE POLY(ISOBUTYLÈNE) IONIQUEMENT RÉTICULABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2010 US 414043 P**
**27.10.2011 US 201113282500**

(43) Date of publication of application:
**25.09.2013 Bulletin 2013/39**

(73) Proprietor: **3M Innovative Properties Company**
**Saint Paul, MN 55133-3427 (US)**

(72) Inventors:
- **LEE, Hae-Seung**
  **Saint Paul, Minnesota 55133-3427 (US)**
- **CHATTERJEE, Joon**
  **Saint Paul, Minnesota 55133-3427 (US)**
- **CALDWELL, Gregg A.**
  **Saint Paul, Minnesota 55133-3427 (US)**
- **GADDAM, Babu N.**
  **Saint Paul, Minnesota 55133-3427 (US)**

(74) Representative: **Herzog, Fiesser & Partner Patentanwälte PartG mbB**
**Isartorplatz 1**
**80331 München (DE)**

(56) References cited:
**WO-A1-2011/062852** **US-A- 4 533 723**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Cross Reference To Related Application

This application claims the benefit of U.S. Provisional Patent Application No. 61/414043, filed November 16, 2010.

### Technical Field

This invention relates to pressure-sensitive adhesives and adhesive sealants prepared from isobutylene copolymers, and tape articles prepared therefrom. The pressure-sensitive adhesives are characterized by exhibiting an overall balance of adhesive and cohesive characteristics and exceptional adhesion to low surface-energy substrates.

### Background

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

According to the Pressure-Sensitive Tape Council, pressure-sensitive adhesives (PSAs) are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive tapes over the years, performance requirements have become more demanding. Shear holding capability, for example, which originally was intended for applications supporting modest loads at room temperature, has now increased substantially for many applications in terms of operating temperature and load. So-called high performance pressure-sensitive tapes are those capable of supporting loads at elevated temperatures for 10,000 minutes. Increased shear holding capability has generally been accomplished by crosslinking the PSA, although considerable care must be exercised so that high levels of tack and adhesion are retained in order to retain the aforementioned balance of properties.

There are a wide variety of pressure sensitive adhesive (PSA) materials available today that include natural crude or synthetic rubbers, block copolymers, and acrylic ester based polymeric compositions. Central to all PSAs is a desired balance of adhesion and cohesion that is often achieved by optimizing the physical properties of the acrylic elastomer, such as glass transition temperature and modulus. For example, if the glass transition temperature (Tg) or modulus of the elastomer is too high and above the Dahlquist criterion for tack (storage modulus of $3 \times 10^6$ dynes/$cm^2$ at room temperature and oscillation frequency of 1 Hz), the material will not be tacky and is not useful by itself as a PSA material. Often in this case, low molecular weight, high $T_g$ resin polymers (tackifiers) or low molecular weight, low $T_g$ polymers (plasticizers) are often used to modulate the $T_g$ and modulus into an optimal PSA range.

### Summary

The adhesive (co)polymers of this disclosure comprise: a) an isobutylene copolymer having pendent succinate groups and optionally a tackifier. On exposure to water or humidity the pendent succinate groups hydrolyze to pendent succinic acid groups, which ionically crosslinks the isobutylene copolymer by hydrogen boding with adjacent pendent succinic acid groups.

In one aspect the pressure-sensitive adhesive comprises the interpolymerized reaction product of isobutylene and at least one monomer having a pendent succinic ester or anhydride group which may be hydrolyzed to pendent succinic acid groups.

The pressure-sensitive adhesives of this disclosure provide the desired balance of tack, peel adhesion, and shear holding power, and further conform to the Dahlquist criteria; i.e. the modulus of the adhesive at the application temperature, typically room temperature, is less than $3 \times 10^6$ dynes/cm at a frequency of 1 Hz.

In recent years, there has been a significant increase of the usage of low surface energy, olefin-based thermoplastics (e.g., polyethylene, polypropylene, ethylene propylene diene monomer rubber (EPDM)) in automotives, paints, appliances and electronics markets. The advantages of the new materials include affordable cost, easy processibility, and excellent mechanical properties. However, this trend creates a challenge in terms of making adhesive bonds to these low energy surfaces.

When considering adhesive tapes, pressure-sensitive adhesive (PSA) tapes are the easiest to use, but for the most part, pressure-sensitive adhesives do not adhere well to low surface energy substrates. Additionally, most PSAs are unsuited for uses requiring good internal (cohesive) strength at elevated temperatures. For example, rubber-resin PSAs tend to soften and degrade when heated. PSAs based on styrene-containing block copolymers also do not retain good internal strength when heated, because styrene has a low $T_g$ and so softens at moderately elevated temperatures. Currently the bonding to low surface-energy surfaces is achieved by priming the substrate with polar liquid followed by application of PSAs. Even after this two step process, the existing PSAs do not fulfill customer requirements. There is need to develop primerless LSE PSAs at competitive cost but still with the most optimized properties.

Recently, polyisobutylene (PIB) has been considered as an attractive material for low surface energy (LSE) bonding applications due to its excellent adhering properties on olefin-based thermoplastics. In addition, the excellent moisture and oxygen barrier properties of PIB suggest that PIB-based materials have potential use in electronic and photovoltaic encapsulation applications. In spite of its beneficial properties, low cohesive strength of the material has limited the uses for high shear applications. Another possible application for PIB-based material is in the medical adhesive field. Most acrylate-based PSAs are not suitable for medical application since acrylate PSAs tend to give off toxic vapors at elevated temperatures. Acrylate-based PSAs typically contain monomeric materials which, even at ordinary room temperatures, exude odors that make acrylate PSA tapes generally unsuitable for medical uses. Poly(isobutylene) PSAs are often used for medical uses because they are physiologically inert, but again they tend to be deficient in internal strength.

The adhesive compositions of the present disclosure provide an improved pressure- sensitive and hot-melt adhesive composition which may be adhered to a variety of substrates, including low surface-energy (LSE) substrates, within a wide temperature range and provide good adhesive strength and holding characteristics. The adhesive compositions are easily handled, and are environmentally friendly due to the low volatile organic compound (VOC) content, such as solvents. The adhesive compositions of the present disclosure further provide a pressure-sensitive adhesive article, such as adhesive tapes and sealants.

As used herein

"Alkyl" means a linear or branched, cyclic or acylic, saturated monovalent hydrocarbon having from one to about twelve carbon atoms, e.g., methyl, ethyl, 1-propyl, 2-propyl, pentyl, and the like.

"Alkylene" means a saturated divalent hydrocarbon having from one to about twelve carbon atoms or a branched saturated divalent hydrocarbon having from three to about twelve carbon atoms, e.g., methylene, ethylene, propylene, 2-methylpropylene, pentylene, hexylene, and the like.

"Alkenyl" means a unsaturated monovalent hydrocarbon having from one to about twelve carbon atoms or a branched unsaturated hydrocarbon having from three to about twelve carbon atoms.

"Aryl" means a monovalent aromatic, such as phenyl, naphthyl and the like.

"Arylene" means a polyvalent, aromatic, such as phenylene, naphthalene, and the like.

"Aralkylene" means a groups defined above with an aryl group attached to the alkylene, e.g., benzyl, 1-naphthylethyl, and the like.

**Detailed Description**

The adhesive (co)polymers of this disclosure comprise) an isobutylene copolymer having pendent succinic acid groups, and b) optionally a tackifier. The isobutylene copolymer having pendent succinic acid groups may be prepared by free radical addition of maleic anhydride, or esters of fumaric or succinic acid to an isobutylene copolymer. Such free radical addition leads to a complex mixture of substituted products including hydrogen abstraction products, beta-scission products and free-radical polymerization of maleic anhydride. Such complex addition products may be represented by the generalized formula:

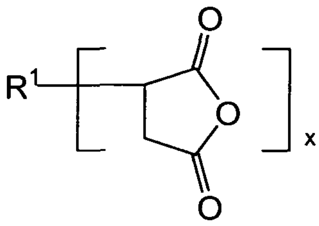
I or
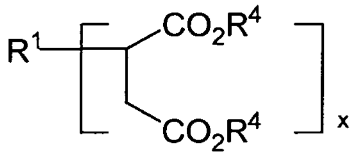
II

where $R^1$ represents the polymeric isobutylene having at least 20 repeat units, subscript x represents a fraction of those repeat units substituted by the cyclic anhydride or ester, and R4 is an alkyl group or aryl group. Typically 1 to 5 percent of the repeat units of the isobutylene copolymer will be substituted by cyclic anhydride groups.

The substituted polyisobutylene of Formulas I and II may be prepared by free radical addition of maleic anhydride ( or a fumaric or maleic ester) to a halogenated PIBs, including halogenated poly(isobutylene-co-methylstyrene), halogenated poly(isobutylene-co-isoprene) and non-halogenated polyisobutylenes such as butyl rubbers. There are several commercially-available halogenated polyisobutylene, but alternatively a non-halogenated polyisobutylene may be halogenated, then subsequently substituted. The halogen moiety in those materials allows introduction of the pendent ethylenically unsaturated groups. Non-halogenated polyisobutylenes may be likewise functionalized, typically by generating free radicals at the allylic positions of the polymer chain.

In some embodiments, the substituted polyisobutylene of Formulas I and II may be prepared by free radical addition of maleic anhydride (or a fumaric or maleic ester) to a non-halogenated polyisobutylene. The non-halogenated polyisobutylene is a copolymer comprising isobutylene repeat units and a small amount of units derived from another monomer such as, for example, styrene, isoprene, butene, or butadiene. These copolymers generally comprise at least 90 weight percent of the polyisobutylene copolymer is formed from isobutylene repeat units. Exemplary copolymers include isobutylene copolymerized with isoprene.

The starting copolymers of isobutylene may include those wherein isobutylene is copolymerized with another monomer, which may be subsequently modified to include the pendent succinate group. Synthetic rubbers include butyl rubbers which are copolymers of mostly isobutylene with a small amount of isoprene, for example, butyl rubbers available under the tradenames VISTANEX (Exxon Chemical Co.) and JSR BUTYL (Japan Butyl Co., Ltd.). In some embodiments, the copolymers are substantially homopolymers of isobutylene, for example, polyisobutylene resins, which may be subsequently modified to include the pendent unsaturated group, available under the tradenames OPPANOL (BASF AG) and GLISSOPAL (BASF AG). The copolymers also include copolymers of mostly isobutylene with n-butene or butadiene, which may be subsequently modified to include the pendent unsaturated group. In some embodiments, a mixture of copolymers may be used, i.e., the first polyisobutylene comprises a homopolymer of isobutylene and the second polyisobutylene comprises butyl rubber, or the first polyisobutylene comprises butyl rubber and the second polyisobutylene comprises a copolymer of isobutylene, subsequently modified. Blends of isobutylene homopolymer and modified poly(isobutylene) are also contemplated.

The isobutylene copolymer may comprise a random copolymer of isobutylene and modified para-methylstyrene units, wherein said random copolymer contains 1 to 20% by weight of said modified para-methylstyrene units. This random copolymer is, for example, commercially available from Exxon Chemical Co. under the trade name of EXXPRO series, and examples thereof include MDX90-10, MDX89-4. A portion of the methyl groups at the para-position of this para-methylstyrene can be brominated to form a site for the subsequent free radical initiation and addition to maleic anhydride. Accordingly, a crosslinked structure can be formed by the technique described in detail hereinafter. Particularly, regarding the copolymer MDX90-10, 1.2% by mol of para-methylstyrene, which is contained in the copolymer in the amount of 7.5% by weight, is brominated. Regarding MDX89-4, 0.75% by mol of para-methylstyrene, which is contained in the copolymer in the amount of 5% by weight, is brominated. In addition, bromination of para-methylstyrene and random polymerization between isobutylene and para-methylstyrene, for the purpose of producing a random copolymer, can be performed by known techniques.

Para-methylstyrene monomer units can also impart heat resistance and strength to the copolymer by the cohesive force and hardness of para-methylstyrene itself. To obtain such an effect, para-methylstyrene is preferably contained in the copolymer in amounts of greater than zero, preferably about 1 to 20 parts by weight based on the total amount of the copolymer. When the amount of para-methylstyrene is smaller than 1 part by weight, the cohesive force is insufficient and it becomes difficult to obtain enough adhesion to endure practical use. On the other hand, when the amount of para-methylstyrene is larger than 20 parts by weight, the flexibility is drastically lowered and the adhesion as an important characteristics of the adhesive disappears and, therefore, it becomes impossible to refer to it as a pressure-sensitive adhesive any longer.

The polyisobutylene may be halogenated or non-halogenated and may be of the structure:

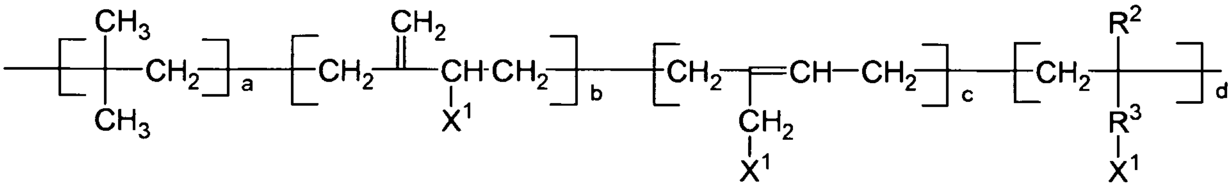

III

wherein the subscripts a to d represent the number of repeat units of the constituent monomer units, a is at least 20, and at least one of b, c and d are at least one, $R^2$ is H or $CH_3$, and $R^3$ is an alkenyl group, an arylene group or combination thereof, and $X^1$ is a halogen atom such as a bromine (for halogenated polyisobutylenes) or H (for non-halogenated polyisobutylenes). The subscripts "b" and "c" or "d" are chosen such that the copolymer comprises 1 to 20 wt.% of the respective monomer units e.g. b, c and d are such that the monomer units comprise 1 to 20 wt.% of the copolymer. In Formula III each of subscripts b, c and d may be replaced by subscripts b*, c* and d* that represent the fraction of the b, c and d (respectively) monomer units substituted by the pendent halogen atom. The degree of halogen substitution is such that b* +c* + d* is generally 1 to 5 wt.% of the polymer. It will be understood that the polymer may contain both halogen-substituted monomer units (b*, c* and d*) as well as non-halogen substituted monomer units (a, b, c and d).

The maleation reaction scheme involves a free radical addition reaction between a halogenated polyisobutylene ($X^1$ = halogen) and maleic anhydride as illustrated in Scheme 1 below with an isobutylene bromomethyl styrene copolymer wherein $X^1$ is a halide, is at least 20, and b is at least one. It will be understood that while maleic anhydride is illustrated, maleic or fumaric esters may also be used.

Scheme 1

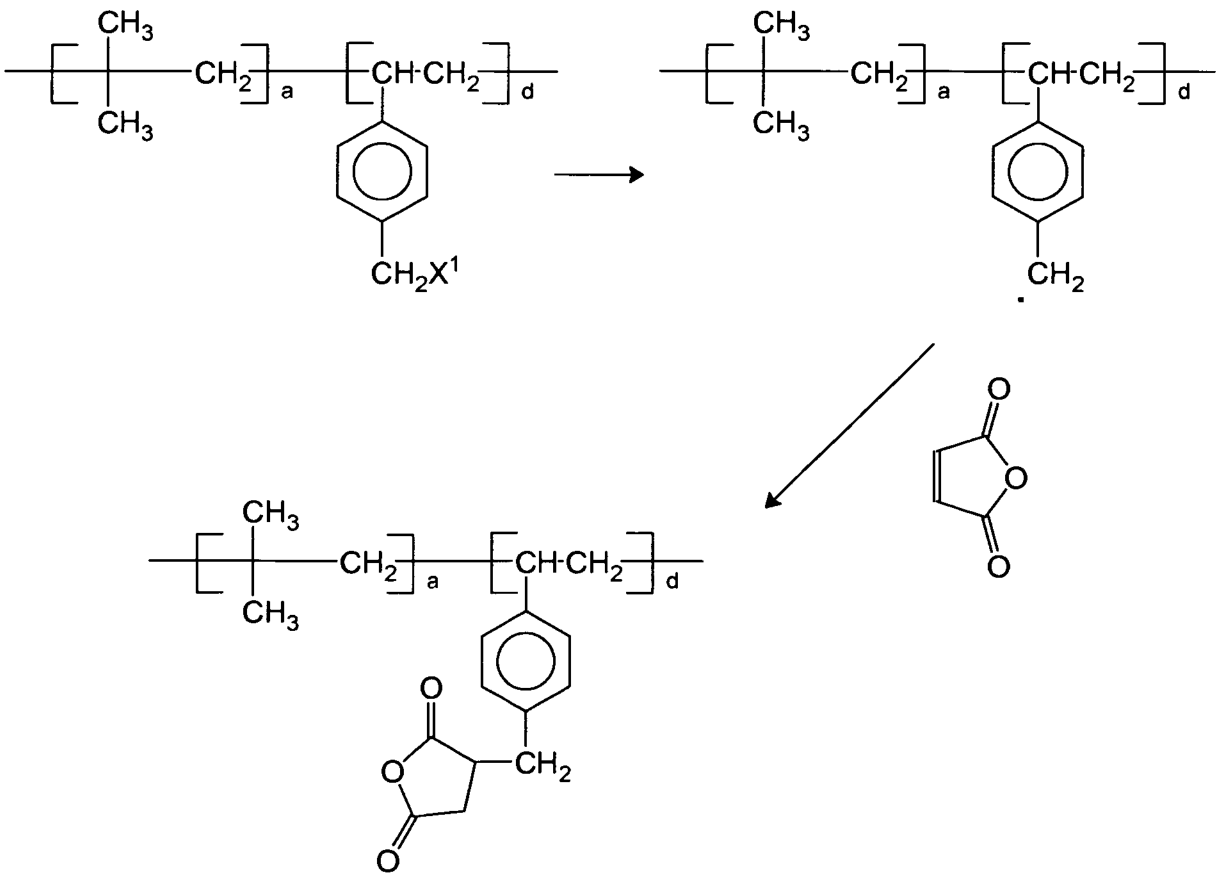

Alternatively, a non-halogenated polyisobutylene, such as a butyl rubber, may be treated with a free radical initiator to generate free radical on the polymer chain, and subsequently treated with maleic anhydride. With respect to the polyisobutylene of Formula III, typically the allylic position of monomer units b, c and/or d are free-radically substituted.

The non-halogenated (e.g. PIB) synthetic rubber material can be a homopolymer, copolymer, or a mixture

thereof. Copolymers can be random or block copolymers. Block copolymers can include the polyisobutylene sections in the main backbone, in a side chain, or in both the main backbone and a side chain of the polymeric material. The polyisobutylene material is typically prepared by polymerizing isobutylene alone or by polymerizing isobutylene plus additional ethylenically unsaturated monomers in the presence of a Lewis Acid- catalyst such as aluminum chloride, boron trichloride (with titanium tetrachloride as a cocatalyst), or boron trifluoride.

Non-halogenated polyisobutylene materials are commercially available from several manufacturers. Homopolymers are commercially available, for example, under the trade designation OPPANOL (e.g., OPPANOL B10, B15, B30, B50, B100, B150, and B200) from BASF Corp. (Florham Park, NJ). These polymers often have a weight average molecular weight ($M_w$) in the range of about 40,000 to 4,000,000 grams per mole. Still other exemplary homopolymers are commercially available from United Chemical Products (UCP) of St. Petersburg, Russia in a wide range of molecular weights. For example, homopolymers commercially available from UCP under the trade designation SDG have a viscosity average molecular weight ($M_v$) in the range of about 35,000 to 65,000 grams per mole. Homopolymers commercially available from UCP under the trade designation EFROLEN have a viscosity average molecular weight ($M_v$) in the range of about 480,000 to about 4,000,000 grams per mole. Homopolymers commercially available from UCP under the trade designation JHY have a viscosity average molecular weight in the range of about 3000 to about 55,000 grams per mole.

As previously described, the free radical addition is complex. The nominal substitution product is at the benzylic carbon as shown, however the succinyl group may be substituted at any of the aliphatic carbon atoms shown in Scheme 1. It will be appreciated that the reaction product may further comprise such free radical substitution products that result from hydrogen abstraction of the depicted aliphatic hydrogen atoms, pendent homo- polymers or oligomers of maleic anhydride, and pendant succinyl groups resulting from β-scission. The reaction product may further comprise pendent or free polymers resulting free homopolymerization of the monomer. Reference may be made to S. Ranganathan et al., J. Poly, Chem., Part A, Vol. 36, 3817-3825 (1999), H.J.M. de Groot et al., Macromol., Vol. 29, 1151-1157 (1996), H. Huang et al., Polymer, Vol 42, 5549-5557 (2001) and M. Abbate, et al., Journal of Applied Polymer Science, 58: 1825-1837(1995).

Any conventional free radical initiator may be used to generate the initial radical. Examples of suitable thermal initiators include peroxides such as benzoyl peroxide, dibenzoyl peroxide, dilauryl peroxide, cyclohexane peroxide, methyl ethyl ketone peroxide, hydroperoxides, e.g., tert-butyl hydroperoxide and cumene hydroperoxide, dicyclohexyl peroxydicarbonate, 2,2,-azo-bis(isobutyronitrile), and t-butyl perbenzoate. Examples of commercially available thermal initiators include initiators available from DuPont Specialty Chemical (Wilmington, Del.) under the VAZO trade designation including VAZO™ 64 (2,2'-azo-bis(isobutyronitrile)) and VAZO™ 52, and Lucidol™ 70 from Elf Atochem North America, Philadelphia, Pa.

The initiator is used in an amount effective to facilitate free radical addition of the monomer and the amount will vary depending upon, e.g., the type of initiator, and the molecular weight of the polymer and the degree of functionalization desired. The initiators can be used in amounts from about 0.001 part by weight to about 5 parts by weight based on 100 parts isobutylene copolymer.

In one embodiment, the free radical addition may comprise a solution polymerization method, whereby the monomer and the isobutylene polymer, and a suitable inert organic solvent are charged into a reaction vessel and then purged with nitrogen to create an inert atmosphere. Once purged, the solution within the vessel is optionally heated, the initiator is added, and the mixture is stirred during the course of the reaction.

Reactive extrusion, such as the continuous free radical polymerization methods described in U.S. Pat. Nos. 4,619,979 and 4,843,134 (both Kotnour et al.), may also be utilized to prepare the adhesives of the disclosure. Reactive extrusion is a solventless technology where the free radical addition is initiated by thermal means. The monomer and isobutylene polymer and the initiator are fed to an extruder. The temperature along the extruder is varied to control the free radical addition. Chain transfer agents are added to control the molecular weight and prevent gel formation. The functionalized polymer obtained at the end of the extruder may then be hot melt coated on to a suitable substrate.

On exposure to water or humidity, the pendent succinic anhydride (or alternatively the pendent succinic or fumaric ester) may be hydrolyzed to pendent succinic acid groups. The monomer units having pendent succinic acid groups may be derived from halogenated butyl rubber and are of the general formula IV:

IV

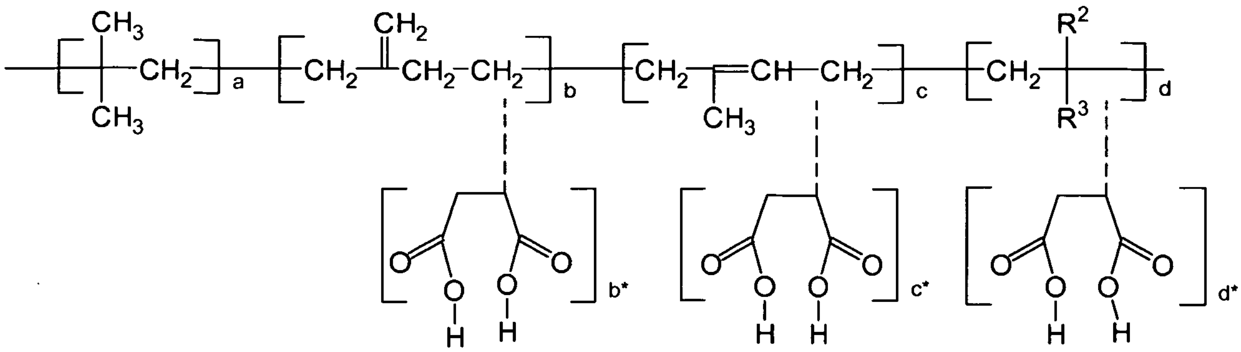

wherein a is at least 20, and at least one of b, c and d are at least one, $R^2$ is H or $CH_3$, and $R^3$ is an alkyl group, an aryl group or combination thereof, and each of b*, c* and d* represent the fraction of the b, c and d (respectively) monomer units substituted by the pendent succinyl group. In addition to the succinic acid groups depicted, the adhesive polymer may further comprise pendent succinic anhydride or ester groups, corresponding to monomer units of Formulas I and II (supra) as result of incomplete hydrolysis. One may compare Formula IV with precursor formula III.

It may be noted that the succinic acid groups are not shown as bonded to any particular carbon, as result of $\alpha$-cleavage and $\beta$-scission, but may be attached to any non-quaternary carbon atom. Generally the succinic acid groups are attached to a benzylic or allylic carbon atom and a mixture of free-radical substitution products results. Further, with regard to Formula III, the subscripts "b" and "c" or "d" are chosen such that the copolymer comprises 1 to 20 wt.% of the respective monomer units: e.g. b and c are such that the -Q-Z monomer units comprise 1 to 20 wt.% of the copolymer. The degree of substitution is such that b* +c* + d* is 1 to 5 wt.%

As a result of $\beta$-scission, the pendent succinic group may be represented as:

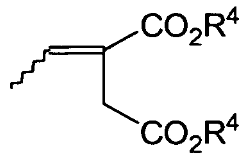

In some preferred embodiments, the $R^3$ -succinic acid substitution product may be represented as

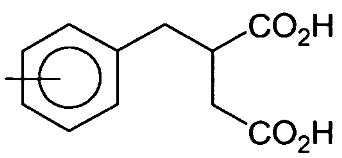

In some preferred embodiments, the succinic acid substituted polyisobutylene copolymer may be represented as follows, where a is at least 20, d is at least 1. Preferably d is chosen to comprise 1 to 20 wt.% of the copolymer.

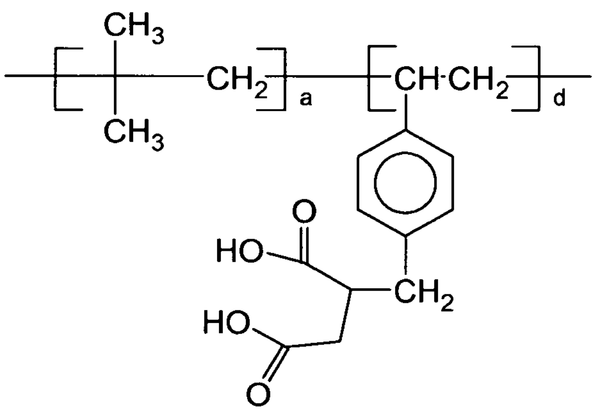

The copolymer of Formula IV is generally prepared by free radical addition of an $\alpha,\beta$-unsaturated ester or cyclic anhydride to a commercially available halogenated PIBs, including halogenated poly(isobutylene-co-methylstyrene), halogenated poly(isobutylene-co-isoprene). Alternatively, a non-halogenated PIB-based material may be halogenated, then subsequently substituted by free radical addition.

The initial free radical addition product is a polyisobutylene polymer having pendent succinic anhydride or ester groups. On exposure to water or humidity, the succinic acid or anhydride groups hydrolyze to succinic acid groups, which ionically crosslink the polymer by hydrogen bonding with adjacent carboxylic acid groups as illustrated below. As a result of the hydrolysis and ionic crosslinking, the adhesive's cohesive strength properties increase with time.

In one embodiment, the free radical addition product may be coated directly on a substrate (from a solution or hot melt) and exposed to a high humidity environment to effect the hydrolysis. In another embodiment free radical addition product may be coated as before, but passively hydrolyzed by exposure to ambient humidity. In either method, the isobutylene polymer may comprise both succinic anhydride (or ester) groups and the succinic acid groups, as a function of the degree of hydrolysis.

Upon hydrolysis, such as exposure to water or humidity, the acid groups of the resulting succinic acid ionically self-crosslink with adjacent acid groups as illustrated in Scheme V, where $R^1$ represents the polymeric isobutylene radical having at least 20 repeat units. No additional crosslinking agents, such as di-or polyvalent alcohols or amines are necessary to form the ionic crosslinking.

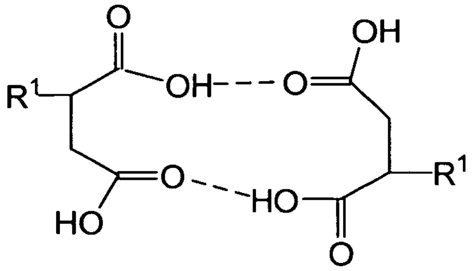

V

Conventional adhesives do not adhere well to certain substrates, such as certain types of automotive paints and low energy surfaces. Efforts have been made to improve the adhesion of adhesives, i.e., develop more aggressive tack, to these types of surfaces; tackifying the base polymer is commonly practiced. Various types of tackifiers include phenol modified terpenes, hydrocarbon resins such as polyvinyl cyclohexane and poly(t-butyl styrene), and rosin esters such as glycerol esters of rosin and pentaerythritol esters of rosin.

Various types of tackifiers include phenol-modified terpenes and rosin esters such as glycerol esters of rosin and pentaerythritol esters of rosin that are available under the trade names Nuroz™, Nutac™ (Newport Industries), Permalyn™, Staybelite™, Foral™ (Eastman). Also available are hydrocarbon resin tackifiers that typically come from C5 and C9 monomers by products of naphtha cracking and are available under the trade names Piccotac™, Eastotac™, Regalrez™, Regalite™ (Eastman), Arkon™ (Arakawa), Norsolene™, Wintack™ (Cray Valley), Nevtack, LX (Neville Chemical Co.), Hikotack™, Hikorez™ (Kolon Chemical), Novares™ (Rutgers N.V.), Quintone™ (Zeon), Escorez™ (Exxonmobile Chemical), Nures™, and H-Rez™ (Newport Industries).

Conventional tackified pressure-sensitive adhesives can also appear cloudy, demonstrating a loss in the characteristic transparency found in many conventional pressure-sensitive adhesive compositions. The cloudiness is an indication of limited or incomplete compatibility of the tackifier and the polymers. The reduced compatibility can lead to a degradation of adhesive properties on aging, as evidenced by a loss of tack or reduced peel adhesion. In some cases, the addition of a tackifier to an adhesive composition can be clear and appear to be compatible. However, after removing the solvent, curing the adhesive, or on aging, the adhesive can become cloudy, indicating some incompatibility between the tackifier and acrylic base polymer.

In many embodiments, the present disclosure provides tackified adhesive compositions that overcome problems noted in the art. The tackifier is preferably selected from a material that is essentially free of any ethylenically or acetylenically unsaturated bonds. The tackifier includes, but is not limited to, hydrogenated rosin resins, hydrogenated and esterified rosin resins, hydrogenated terpene resins, aliphatic petroleum resins, aromatic petroleum resins, alicyclic petroleum resins obtained by hydrogenating aromatic petroleum resins, and the like. Preferably, the tackifier used is selected from hydrogenated $C_9$ petroleum resins such as but not limited to Regalrez™ tackifiers (Eastman) or Arkon™ (Arakawa) tackifiers. Such "hydrophobic tackifiers", may be used in amounts of greater than zero, e.g. 10 to 150 parts, preferably 10 to 100 parts, of said tackifier, relative to 100 parts of said isobutylene co)polymer.

Plasticizers may also be used in the adhesive formulation to provide wetting action and/or viscosity control. These plasticizers are well known in the art and may include hydrocarbon oils, liquid or soft tackifiers, including liquid hydrocarbon resins, liquid polyterpenes, liquid poly(isobutylenes) such as Glissopal$^{tm}$, and the like, waxes, and mixtures

of oils. A plasticizer may be present in the pressure sensitive adhesive of the present invention in an amount of from 0 to about 200 parts by weight per 100 parts by weight of the copolymer.

The adhesives of the present disclosure may be coated upon a variety of flexible and inflexible backing materials using conventional coating techniques to produce adhesive-coated materials. Flexible substrates are defined herein as any material which is conventionally utilized as a tape backing or may be of any other flexible material. Examples include, but are not limited to plastic films such as polypropylene, polyethylene, polyvinyl chloride, polyester poly(ethylene terephthalate), polycarbonate, poly(methyl methacrylate) (PMMA), cellulose acetate, cellulose triacetate, and ethyl cellulose. Foam backings may be used. Examples of inflexible substrates include, but are not limited to, metal, metallized polymeric film, indium tin oxide coated glass and polyester, PMMA plate, polycarbonate plate, glass, or ceramic sheet material. The adhesive-coated sheet materials may take the form of any article conventionally known to be utilized with adhesive compositions such as labels, tapes, signs, covers, marking indices, display components, touch panels, and the like. Flexible backing materials having microreplicated surfaces are also contemplated.

The adhesives of the present disclosure are particularly useful for forming strong bonds to low surface energy (LSE) substrates. As used herein, low surface energy substrates are those having a surface energy of less than about 45 dynes per centimeter, more typically less than about 40 dynes per centimeter, and most typically less than about 35 dynes per centimeter. Included among such materials are polypropylene, polyethylene (e.g., high density polyethylene or HDPE), polystyrene and poly(methyl methacrylate) (PMMA). Other substrates may also have properties of low surface energy due to a residue, such as an oil residue or a film such as paint, being on the surface of the substrate. However, even though the present adhesive bonds well to low surface energy surfaces, the invention is not limited to being bonded to low surface energy substrates, as it has been found that the inventive adhesive can also bond well to higher surface energy substrates such as, for example, other plastics, ceramics, glass and metals.

The substrate is selected depending on the particular application in which it is to be used. For example, the adhesive can be applied to sheeting products, (e.g., decorative graphics and reflective products), label stock, and tape backings. Additionally, the adhesive may be applied directly onto a substrate such as an automotive panel, or a glass window so that another substrate or object can be attached to the panel or window.

The adhesive can also be provided in the form of a pressure-sensitive adhesive transfer tape in which at least one layer of the adhesive is disposed on a release liner for application to a permanent substrate at a later time. The adhesive can also be provided as a single-coated or double-coated tape in which the adhesive is disposed on a permanent backing. Backings can be made from plastics (e.g., polypropylene, including biaxially oriented polypropylene, vinyl, polyethylene, polyester such as poly(ethylene terephthalate), nonwovens (e.g., papers, cloths, nonwoven scrims), metal foils, foams (e.g., polyacrylic, polyethylene, polyurethane, neoprene), and the like. Foams are commercially available from various suppliers such as 3M Co., Voltek, Sekisui, and others. The foam may be formed as a coextruded sheet with the adhesive on one or both sides of the foam, or the adhesive may be laminated to it. When the adhesive is laminated to a foam, it may be desirable to treat the surface to improve the adhesion of the adhesive to the foam or to any of the other types of backings. Such treatments are typically selected based on the nature of the materials of the adhesive and of the foam or backing and include primers and surface modifications (e.g., corona treatment, surface abrasion). Additional tape constructions include those described in U.S. 5,602,221 (Bennett et al.). Those skilled in the art will also know that other additives such as fillers, antioxidants, stabilizers, and colorants may be blended with the adhesive for beneficial properties.

For a single-sided tape, the side of the backing surface opposite that where the adhesive is disposed is typically coated with a suitable release material. Release materials are known and include materials such as, for example, silicone, polyethylene, polycarbamate, polyacrylics, and the like. For double coated tapes, another layer of adhesive is disposed on the backing surface opposite that where the adhesive of the invention is disposed. The other layer of adhesive can be different from the adhesive of the invention, e.g., a conventional acrylic PSA, or it can be the same adhesive as the invention, with the same or a different formulation. Double coated tapes are typically carried on a release liner.

The above-described compositions are coated on a substrate using conventional coating techniques modified as appropriate to the particular substrate. For example, these compositions can be applied to a variety of solid substrates by methods such as roller coating, flow coating, dip coating, spin coating, spray coating, knife coating, and die coating. These various methods of coating allow the compositions to be placed on the substrate at variable thicknesses thus allowing a wider range of use of the compositions. Coating thicknesses may vary, but coating thicknesses of 2-500 microns (dry thickness), preferably about 25 to 250 microns, are contemplated.

In some embodiments, the adhesive compositions, particularly pressure-sensitive adhesive compositions, are applied as a solvent solution or dispersion, the solvent evaporated, and the adhesive composition crosslinked on exposure to actinic radiation, such as UV. Crosslinking of such solvent-based compositions may occur before, but preferably occurs after coating and solvent removal. Suitable solvents such as alkanes, ethyl acetate, toluene and tetrahydrofuran which are unreactive with the functional groups of the components of the copolymer

EXAMPLES

As used in this section, the word polymer may be a homopolymer or a co-polymer, or a mixture thereof.

**Test Methods:**

**90° Angle Peel Adhesion Strength Test.**

Peel adhesion strength was measured at a 90° angle using an IMASS SP-200 slip/peel tester (available from IMASS, Inc., Accord MA) at a peel rate of 305 mm/minute (12 inches/minute) using the procedure described in ASTM International standard, D3330, Method F. Test panels were prepared by wiping the panels with a tissue wetted with the corresponding solvents shown in Table 1 using heavy hand pressure to wipe the panel 8 - 10 times. This procedure was repeated two more times with clean tissues wetted with solvent. The cleaned panel was allowed to dry. The adhesive tape was cut into strips measuring 1.27 cm x 20 cm (1/2 in. x 8 in.) and the strips were rolled down onto the cleaned panel with a 2.0 kg (4.5 lb.) rubber roller using 2 passes. The prepared samples were stored at 23°C/50%RH for 24 hours before testing. Two samples were tested for each example and averaged values were expressed in N/dm. Failure mode was noted and recorded as COH - cohesive, i.e., the adhesive split leaving residue on both the tape and test surface, ADH - adhesive, i.e., the adhesive peeled cleanly from the test surface, and 2-B (2-Bond) - the adhesive peeled away from the backing.

Table 1 - Peel Adhesion Test Panel Materials and Cleaning Solvent

| **Material** | **Solvent** |
|---|---|
| HDPE - High density polyethylene | Isopropyl alcohol |
| PP - Polypropylene | Isopropyl alcohol |
| EPDM - Ethylene/propylene/diene monomer copolymer | Isopropyl alcohol |
| TPE - Thermoplastic Elastomer based on EPDM and polypropylene - Santoprene$^{tm}$ | Isopropyl alcohol |
| SS - Stainless Steel | Heptane |
| Glass - Soda-lime glass | Heptane |

**Static Shear Strength**

The static shear strength was evaluated as described in the ASTM International standard, D3654, Procedure A at 23°C/50% RH (relative humidity) using a 1000 g load. Tape test samples measuring 1.27 cm x 15.24 cm (1/2 in. x 6 in.) were adhered to 1.5 inch by 2 inch stainless steel (SS) panels using the method to clean the panel and adhere the tape described in the peel adhesion test. The tape overlapped the panel by 1.27 cm x 2.5 cm. and the strip was folded over itself on the adhesive side, and then folded again. A hook was hung in the second fold and secured by stapling the tape above the hook. The weight was attached to the hook and the panels were hung in a 23°C/50% RH room or a 70°C oven. The time to failure in minutes was recorded. If no failure was observed after 10,000 minutes, the test was stopped and a value of >10,000 minutes was recorded. The mode of failure described in the peel adhesion test was also noted.

**Percent Gel Test**

The percent gel was determined as described in the ASTM International standard, D3616-95. A round test specimen measuring 63/64 inch in diameter was die-cut from a tape coated with the polymer and cured. The specimen was placed in a mesh basket measuring 1½ inch x 1½ inch. The basket with the specimen was weighed to the nearest 0.1 mg and placed in a capped jar containing sufficient toluene to cover the sample. After 24 hours the basket (containing the specimen) was removed, drained and placed in an oven at 120°C for 30 minutes. The percent gel was determined by calculating weight % of the remaining, unextracted portion to the original sample. A disc of the uncoated polyester backing material of the same size as the specimen was also die-cut and weighed. The formula used for percent gel determination is shown below:

$$\text{Wt \% Gel} = \frac{\text{((Unextracted sample wt. after extraction - uncoated backing wt.))}}{\text{(Original sample wt. - uncoated backing wt.)}} \times 100$$

Materials used for examples

- The following materials were obtained from ExxonMobil Corporation (Baytown, TX)
  - EXXPRO™ 3745 copolymer - brominated poly(isobutylene-co-methylstyrene)
  - ESCOREZ™ 1310 - hydrocarbon based tackifier
- The follow materials are available from Sigma Aldrich (St. Louis, MO)
  - Maleic anhydride
  - Chlorobenzene
  - Dicumyl Peroxide (Bis-(1,1'-dimethylbenzyl)peroxide)
  - Acetone
- Other materials used
  - OPPANOL™ B 15 polymer - polyisobutylene (Medium MW 80K g/mol unfunctionalized synthetic rubber) available from (BASF, Florham Park NJ)
  - GLISSOPAL™ 1000 plasticizer - unfunctionalized polyisobutylene (Low MW 1000 g/mol) available from BASF, Florham Park, NJ.
  - Hostaphan™ 3SAB - primed polyester film available from Mitsubishi, Greer SC

Preparation of maleic anhydride-modified polyisobutylene (MAMP)

A modified isobutylene polymer was prepared by adding 30.00 g of polyisobutylene (EXXPRO™ 3745 copolymer), 6.00 g of maleic anhydride, 0.75 g dicumyl peroxide, and 200 g chlorobenzene to a three-neck, round-bottomed flask equipped with a reflux condenser, thermometer, and a nitrogen inlet. The mixture was stirred with a magnetic stir bar under nitrogen at room temperature until all of the components were completely dissolved. The flask was then heated to 130°C for 4 hours. The reaction mixture was then cooled to room temperature and the solution was poured into acetone to coagulate the modified polymer. The isolated polymer was washed with fresh acetone three times to remove the unreacted maleic anhydride and dicumyl peroxide. The polymer was filtered and was dried in a vacuum oven for 12 hours at 50 °C, and then cooled to room temperature.

Examples 1 - 3 and Control Compositions C1 - C3

Adhesive compositions for Examples 1-3 were prepared by adding varying amounts of maleic anhydride-modified polyisobutylene (MAMP) and unmodified polyisobutylene polymer (Oppanol™ B15 polymer) shown in Table 2, 400 parts of toluene, 10 pph (parts her hundred parts of polymer) of tackifier (ESCOREZ™ 1310), and 10 pph of low molecular weight polyisobutylene plasticizer (Glissopal™ 1000) to 100 mL glass jars. The total amount of polymer (MAMP and unmodified polyisobutylene) was maintained at 100 parts. The jars were capped and mixed on a roller mill overnight.

Compositions for Control Examples C1 - C3 were prepared in the same manner with the same amounts and types of tackifiers and plasticizers except that unmodified EXXPRO™ 3745 was used instead of MAMP.

The resulting compositions were each knife coated onto 6 inch by 25 inch strips of polyester film (Hostaphan™ 3SAB) to a thickness of 15 mils wet. The coated films were dried in an oven set 70°C for 20 minutes to provide tapes having an adhesive thickness of approximately 2 mils. All of the tapes were conditioned at 23°C and 50% relative humidity for 24 hours before testing.

The tapes were tested for shear strength at room temperature on stainless steel panels with results shown in Table 2, and for 90° peel adhesion on various substrates with results shown in Table 3.

Table 2 - Adhesive Compositions and Tape Shear Strength

| Ex | MAMP (parts) | Exxpro 3745 (parts) | Oppanol B15 PIB | Room Temp Strength Shear (min) | Failure Mode |
|---|---|---|---|---|---|
| 1 | 100 | 0 | 0 | >10,000 | None |
| 2 | 70 | 0 | 30 | >10,000 | None |
| 3 | 40 | 0 | 60 | 3,500 | COH |
| C1 | | 100 | 0 | 3,500 | COH |
| C2 | | 70 | 30 | 300 | COH |
| C3 | | 40 | 60 | 50 | COH |

Table 3 - Peel Adhesion Strength

| Ex | 90° Peel Adhesion (N/dm) | | | | | | Failure Mode |
|---|---|---|---|---|---|---|---|
| | HDPE | PP | EPDM | TPE | SS | Glass | |
| 1 | 6 | 34 | 33 | 19 | 38 | 34 | ADH |
| 2 | 9 | 25 | 46 | 34 | 40 | 45 | ADH |
| 3 | 18 | 38 | 61 | 55 | 56 | 65 | ADH,COH |
| C1 | 6 | 7 | 43 | 74 | 29 | 25 | ADH,COH |
| C2 | 17 | 57 | 40 | 107 | 52 | 39 | COH |
| C3 | 21 | 59 | 84 | 74 | 51 | 46 | COH |

The adhesive tapes for Examples 1 and C1 were tested for gel content and it was determined to be 2% and 3%, respectively. The gel content indicated that the enhanced shear strength was due to ionic crosslinking rather than chemical crosslinking.

This disclosure provides the following adhesive embodiments.

1. An adhesive composition comprising: a) an isobutylene copolymer having pendent succinic acid groups, and b) optionally a tackifier

2. The adhesive composition of embodiment 1 wherein said isobutylene copolymer comprises greater than 0% by weight but less than 20% by weight of polymerized monomer units having pendent succinic acid groups.

3. The adhesive composition of embodiment 2 wherein the isobutylene copolymer having pendent succinic acid group is of the formula:

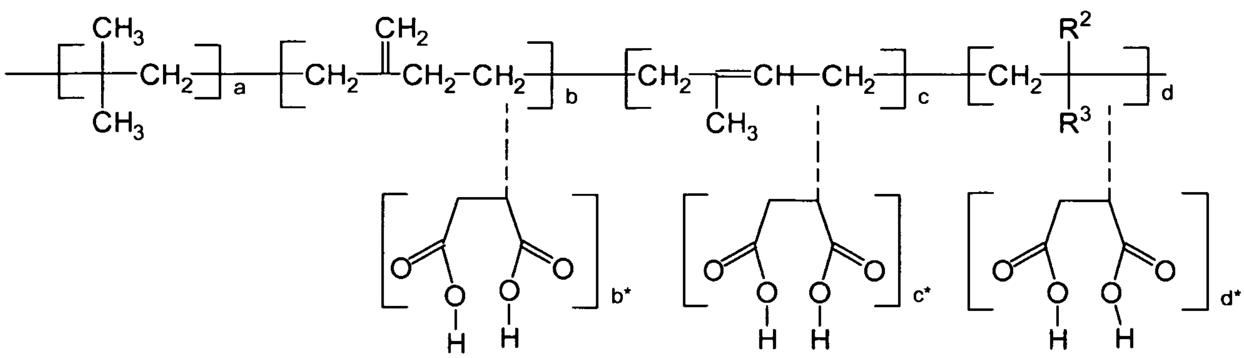

wherein a is at least 20, and at least one of b, c and d are at least one, $R^2$ is H or $CH_3$, and $R^3$ is an alkyl group, an aryl group or combination thereof, and each of b*, c* and d* represent the fraction of the b, c and d (respectively) monomer units substituted by the pendent succinic acid group.

4. The adhesive composition of embodiment 3 wherein "b" and "c" or "d" are chosen such that the copolymer comprises 1 to 20 wt.% of the respective monomer units.

5. The adhesive composition of embodiment 3 wherein b* +c* + d* is 1 to 5 percent of the repeat units of the isobutylene copolymer.

6. The adhesive composition of any of embodiments 1 to 5 comprising greater than 0 to 150 parts by weight of said tackifier per 100 parts by weight of said copolymer.

7. The adhesive composition of any of embodiments 1 to 5 comprising 10 to 100 parts by weight of said tackifier per 100 parts by weight of said copolymer.

8. The adhesive composition of any of embodiments 4 to 7 wherein said pendent succinic acid group is

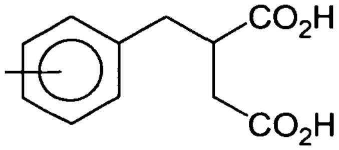

9. The adhesive composition of any of embodiments 1 to 8 wherein the isobutylene copolymer having pendent succinic acid groups represented by the generalized formula:

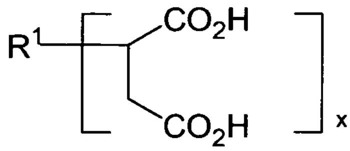
I

wherein
$R^1$ represents the polymeric isobutylene having at least 20 repeat units and subscript x represents a fraction of those repeat units substituted by the succinic acid groups.

10. The adhesive composition of any of embodiments 1 to 9 wherein 1 to 5 percent of the repeat units of the isobutylene copolymer will be substituted by succinic acid groups.

11. The crosslinked adhesive composition of any of embodiments 1 to 10.

12. An article comprising:

a substrate; and
the pressure-sensitive adhesive of any of embodiments 1-10 coated on at least one surface of the substrate.

13. The article of embodiment 12 wherein the substrate in a polymer film substrate.

14. The article of embodiment 12 wherein the substrate in a nonwoven substrate.

15. The adhesive of any of embodiments 1 to 10 wherein said isobutylene copolymer having pendent anhydride groups is prepared by free-radical addition of maleic anhydride to a polyisobutylene, followed by hydrolysis.

16. The adhesive of embodiment 15 wherein the polyisobutylene is a halogenated polyisobutylene.

17. The adhesive of embodiment 16 wherein the halogenated polyisobutylene is a halogenated poly(isobutylene-co-methylstyrene) or halogenated poly(isobutylene-co-isoprene).

18. The adhesive of embodiment 15 wherein said polyisobutylene is a non-halogenated polyisobutylene.

## Claims

1. An adhesive composition comprising: a) an isobutylene copolymer having pendent succinic acid groups, and b) optionally a tackifier.

2. The adhesive composition of claim 1 wherein said isobutylene copolymer comprises greater than 0% by weight but less than 20% by weight of polymerized monomer units having pendent succinic acid groups.

3. The adhesive composition of claim 2 wherein the isobutylene copolymer having pendent succinic acid group is of the formula:

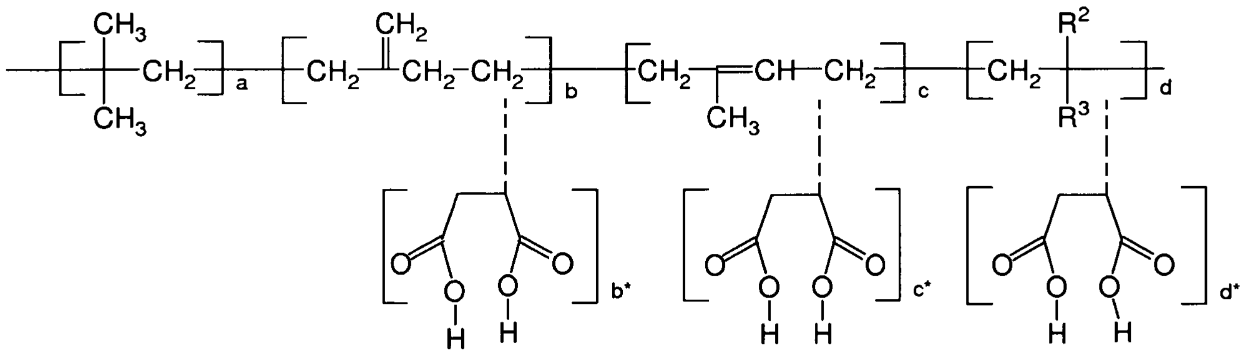

wherein a is at least 20, and at least one of b, c and d are at least one, $R^2$ is H or $CH_3$, and $R^3$ is an alkyl group, an aryl group or combination thereof, and each of b*, c* and d* represent the fraction of the b, c and d (respectively) monomer units substituted by the pendent succinic acid group.

4. The adhesive composition of claim 3 wherein "b" and "c" or "d" are chosen such that the copolymer comprises 1 to 20 wt.% of the respective monomer units.

5. The adhesive composition of claim 3 wherein b* +c* + d* is 1 to 5 percent of the repeat units of the isobutylene copolymer.

6. The adhesive composition of claim 1 comprising 10 to 100 parts by weight of said tackifier per 100 parts by weight of said copolymer.

7. The adhesive composition of claim 1 wherein the isobutylene copolymer having pendent succinic acid groups is represented by the generalized formula:

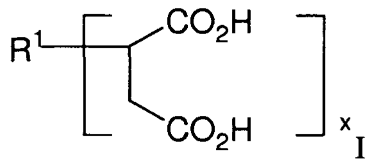
I

wherein
$R^1$ represents the polymeric isobutylene having at least 20 repeat units and subscript x represents a fraction of those repeat units substituted by the succinic acid groups.

8. An article comprising:

   a substrate; and
   the pressure-sensitive adhesive of claim 1 coated on at least one surface of the substrate.

9. The adhesive of claim 1 wherein said isobutylene copolymer having pendent succinic acid groups is prepared by free-radical addition of maleic anhydride to a polyisobutylene, followed by hydrolysis.

**10.** The adhesive of claim 9 wherein the polyisobutylene is a halogenated polyisobutylene.

**Patentansprüche**

**1.** Eine Klebstoffzusammensetzung, umfassend: a) ein Isobutylen-Copolymer mit anhängenden Bernsteinsäuregruppen, und b) wahlweise einen Klebrigmacher.

**2.** Klebstoffzusammensetzung von Anspruch 1, worin das Isobutylen-Copolymer mehr als 0 Gew.-% aber weniger als 20 % Gew.-% polymerisierte Monomereinheiten mit anhängenden Bernsteinsäuregruppen umfasst.

**3.** Klebstoffzusammensetzung von Anspruch 2, worin das Isobutylen-Copolymer mit anhängender Bernsteinsäuregruppe die Formel:

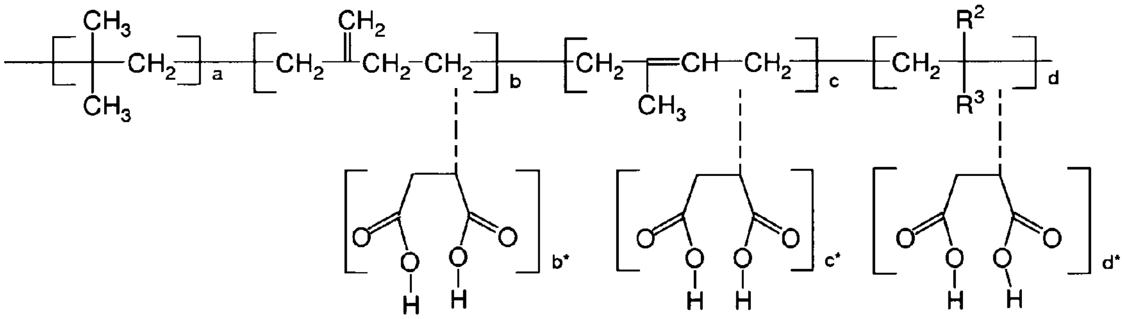

hat, worin a mindestens 20 ist, und mindestens eines von b, c und d mindestens eins ist, $R^2$ H oder $CH_3$ ist, und $R^3$ eine Alkylgruppe, eine Arylgruppe oder eine Kombination davon ist, und jedes b*, c* und d* den Bruchteil der (jeweils) b, c und d Monomereinheiten substituiert durch die anhängende Bernsteinsäuregruppe repräsentiert.

**4.** Klebstoffzusammensetzung von Anspruch 3, worin "b" und "c" oder "d" so gewählt sind, dass das Copolymer 1 bis 20 Gew.-% der jeweiligen Monomereinheiten umfasst.

**5.** Klebstoffzusammensetzung von Anspruch 3, worin b* + c* + d* 1 bis 5 Prozent der sich wiederholenden Einheiten des Isobutylen-Copolymers ist.

**6.** Klebstoffzusammensetzung von Anspruch 1, die 10 bis 100 Gewichtsteile des Klebrigmachers pro 100 Gewichtsteile des Copolymers umfasst.

**7.** Klebstoffzusammensetzung von Anspruch 1, worin das Isobutylen-Copolymer mit anhängenden Bernsteinsäuregruppen repräsentiert ist durch die verallgemeinerte Formel:

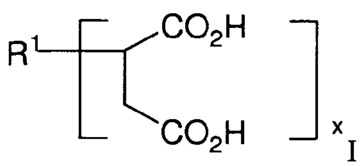

wobei
R1 das polymere Isobutylen mit mindestens 20 sich wiederholenden Einheiten repräsentiert und der Index x einen Bruchteil von diesen sich wiederholenden Einheiten substituiert durch die Bernsteinsäuregruppen repräsentiert.

**8.** Artikel, umfassend:

ein Substrat; und
den druckempfindlichen Klebstoff von Anspruch 1, auf mindestens einer Oberfläche des Substrats als Beschichtung aufgebracht.

9. Klebstoff von Anspruch 1, worin das Isobutylen-Copolymer mit anhängenden Bernsteinsäuregruppen durch freie radikalische Addition von Maleinsäureanhydrid an ein Polyisobutylen, gefolgt durch Hydrolyse, bereitet wird.

10. Klebstoff von Anspruch 9, worin das Polyisobutylen ein halogeniertes Polyisobutylen ist.

## Revendications

1. Composition adhésive comprenant : a) un copolymère d'isobutylène comportant des groupes acide succinique pendants, et b) facultativement un agent poisseux.

2. Composition adhésive selon la revendication 1, dans laquelle ledit copolymère d'isobutylène comprend plus de 0 % en poids, mais moins de 20 % en poids de motifs monomères polymérisés comportant des groupes acide succinique pendants.

3. Composition adhésive selon la revendication 2, dans laquelle le copolymère d'isobutylène ayant un groupe acide succinique pendant répond à la formule :

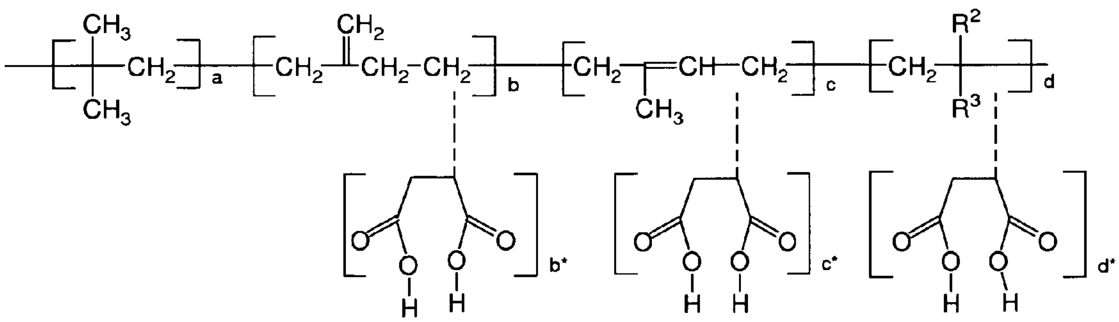

où a est au moins 20, et au moins l'un de b, c et d est au moins un, $R^2$ est H ou $CH_3$, et $R^3$ est un groupe alkyle, un groupe aryle ou une combinaison de ceux-ci, et chacun de b*, c* et d* représentent la fraction des unités monomères b, c et d (respectivement) substituée par le groupe acide succinique pendant.

4. Composition adhésive selon la revendication 3, dans laquelle « b » et « c » ou « d » sont choisis de telle sorte que le copolymère comprend de 1 à 20 % en poids des unités monomères respectives.

5. Composition adhésive selon la revendication 3, dans laquelle b* + c* + d* est 1 à 5 pour cent des unités de répétition du copolymère d'isobutylène.

6. Composition adhésive selon la revendication 1, comprenant 10 à 100 parties en poids dudit agent poisseux pour 100 parties en poids dudit copolymère.

7. Composition adhésive selon la revendication 1, dans laquelle le copolymère d'isobutylène comportant des groupes acide succinique pendants est représenté par la formule générale :

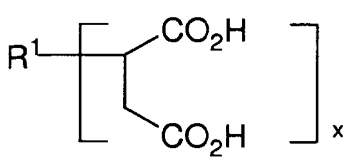
I

où
R1 représente l'isobutylène polymère ayant au moins 20 unités de répétition et l'indice x représente une fraction de ces unités de répétition substituée par des groupes acide succinique.

8. Article comprenant :

un substrat ; et
l'adhésif sensible à la pression selon la revendication 1 appliqué sur au moins une surface du substrat.

**9.** Adhésif selon la revendication 1, dans lequel ledit copolymère d'isobutylène comportant des groupes acide succinique pendants est préparé par addition radicalaire de l'anhydride maléique à un polyisobutylène, suivie d'une hydrolyse.

**10.** Adhésif selon la revendication 9, dans lequel le polyisobutylène est un polyisobutylène halogéné.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61414043 A
- US 4619979 A
- US 4843134 A, Kotnour
- US 5602221 A, Bennett


### Non-patent literature cited in the description


- **A.V. POCIUS.** Adhesion and Adhesives Technology: An Introduction. Hanser Gardner Publication, 2002
- **S. RANGANATHAN et al.** *J. Poly, Chem., Part A,* 1999, vol. 36, 3817-3825
- **H.J.M. DE GROOT et al.** *Macromol.,* 1996, vol. 29, 1151-1157
- **H. HUANG et al.** *Polymer,* 2001, vol. 42, 5549-5557
- **M. ABBATE et al.** *Journal of Applied Polymer Science,* 1995, vol. 58, 1825-1837